# EUROPÄISCHE PATENTSCHRIFT

(11) **EP 2 990 306 B1**
(45) Veröffentlichungstag und Bekanntmachung des Hinweises auf die Patenterteilung: **02.11.2016**
(21) Anmeldenummer: 14182703.0
(22) Anmeldetag: 28.08.2014
(51) Int. Cl.: B62D 21/10, B62D 53/08, B62D 63/06, B62D 21/20

(54) **Fahrzeugrahmenfrontmodul für Fahrzeuganhänger**
Vehicle frame front module for vehicle trailers
Module frontal de châssis de véhicule pour remorques de véhicule

(43) Veröffentlichungstag der Anmeldung: 02.03.2016
(73) Patentinhaber: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(56) Entgegenhaltungen:
- DE-B3-102006 009 857
- GB-A- 435 243
- GB-A- 810 903
- US-A- 1 943 735
- US-A- 3 887 251
- US-A- 4 946 184
- US-A1- 2013 069 340

## Beschreibung

### Technisches Gebiet

Die vorliegende Erfindung betrifft ein Fahrzeugrahmenfrontmodul, insbesondere ein Fahrzeugrahmenfrontmodul eines Fahrzeugrahmens für Sattelauflieger. Außerdem betrifft die vorliegende Offenbarung einen Fahrzeugrahmen für Sattelauflieger.

### Technischer Hintergrund

Fahrzeuganhänger weisen üblicherweise einen Fahrzeugrahmen auf, der aus Längs- und Querträgern besteht, die zumeist miteinander verschweißt sind. Dabei ist es bekannt, den Fahrzeugrahmen aus mehreren zusammengefügten Modulen herzustellen, die ebenfalls miteinander verschweißt sind.

Fahrzeugrahmen weisen einen Heckbereich und einen Frontbereich auf, die jeweils wiederum modular ausgeführt sein können. Bei Sattelaufliegern weist der Frontbereich einen Königszapfen auf, über den der Fahrzeuganhänger mit einem Zugfahrzeug verbunden werden kann. Auf dem Fahrzeugrahmen können Aufbauten, wie z. B. eine Kippmulde, ein Planenaufbau oder ein Container, aufgesetzt und mit diesem verbunden werden.

Bekannte Fahrzeugrahmenfrontmodule sind in Draufsicht in eckiger Form ausgestaltet. Dabei sind die beiden im Wesentlichen von vorne nach hinten verlaufenden Längsträger im Frontbereich mit wenigstens einem Querträger miteinander verbunden, der im Wesentlichen senkrecht zu den Längsträgern verläuft und jeweils an beiden Seiten mit den Längsträgern verschweißt ist. Die Längs- und Querträger können als Doppel-T-, T-Träger oder U-Träger ausgebildet sein.

Gemäß einem Bericht in "Verkehrsrundschau", 26/2014, Erscheinungsdatum: 27. Juni 2014, Verlag Heinrich Vogel, Springer Fachmedien München GmbH, ISSN: 0341 - 2148 B6924, sind die Hersteller von Anhängern insbesondere im Bereich der sogenannten Megatrailer dazu bestrebt, die Sattelhalshöhe so gering wie möglich zu halten. Je geringer die Sattelhalshöhe ist, desto größer ist die Laderaumhöhe im Front- bzw. Halsbereich, wodurch das Gesamtladevolumen vergrößert wird. Die Sattelhalshöhe beschreibt die Höhe des Fahrzeugrahmens im Frontbereich des Sattelaufliegers, an dem der Sattelauflieger mit einem Zugfahrzeug gekoppelt wird. Gemäß dem genannten Bericht gibt es Bestrebungen, Fahrzeugrahmen mit einem Sattelhals von ungefähr 55 mm, 40 mm und sogar 30 mm herzustellen. Gemäß dem genannten Bericht geht jedoch bisher die Reduktion des Sattelhalses mit einer Gewichtserhöhung einher.

Ein weiteres Fahrzeugfrontmodul ist aus der GB432243 und der GB810903 sowie der DE102006009857 B3 bekannt.

### Darstellung der Erfindung

Gemäß der vorliegenden Offenbarung weist ein erfindungsgemäßes Fahrzeugrahmenfrontmodul eines Fahrzeugrahmens eines Sattelaufliegers ein plattenförmiges Hauptelement mit einer ersten Stärke und mehrere plattenförmige Füllelemente mit einer zweiten Stärke auf, die kleiner als die erste Stärke ist. Das plattenförmige Hauptelement hat einen ersten Hauptelementbereich, der dazu ausgebildet ist, einen Königszapfen aufzunehmen, und mehrere zweite Hauptelementbereiche, die sich bezüglich des Königszapfens strahlenförmig vom ersten Hauptelementbereich erstrecken. Die mehreren plattenförmigen Füllelemente sind in die Bereiche zwischen den mehreren zweiten Hauptelementbereichen des plattenförmigen Hauptelements eingebracht und mit dem plattenförmigen Hauptelement verschweißt. Je nach Gegebenheiten und erforderlicher Steifigkeit können die Füllelemente gleiche oder unterschiedliche Dicken aufweisen.

Ein weiterer Aspekt der vorliegenden Offenbarung betrifft einen Fahrzeugrahmen für einen Fahrzeuganhänger. Der erfindungsgemäße Fahrzeugrahmen weist einen Fahrzeugrahmenheckbereich mit einem ersten Hauptlängsträger und einem zweiten Hauptlängsträger, der sich zum ersten Hauptlängsträger im Wesentlichen parallel erstreckt, und ein erfindungsgemäßes Fahrzeugrahmenfrontmodul auf, das mit dem Fahrzeugrahmenheckbereich verbunden, insbesondere verschweißt, ist.

Mit dem erfindungsgemäßen Fahrzeugrahmenfrontmodul kann der Sattelhals, also die Höhe des Fahrzeugrahmens im Frontbereich, verringert werden, was zu einer Vergrößerung der Innenhöhe und einer Erhöhung des Laderaums des Sattelaufliegers führen kann. Zusätzlich kann mit dem erfindungsgemäßen Fahrzeugrahmenfrontmodul gegenüber einem Fahrzeugrahmenfrontmodul mit Trägerstruktur das Gewicht verringert werden, was zu einer Erhöhung des Ladegewichts führen kann.

Der strahlenförmige Verlauf der zweiten Hauptelementbereiche ist ein Verlauf, der bezüglich des Königszapfens nahezu radial ist. Das heißt, dass sich die Längsachsen der sich strahlenförmig erstreckenden zweiten Hauptelementbereiche in einem mittigen Bereich des ersten Hauptelementbereichs schneiden können.

Bei einer bevorzugten Ausgestaltung des erfindungsgemäßen Fahrzeugrahmenfrontmoduls ist der erste Hauptelementbereich kreisförmig oder oval ausgebildet, an dem der Königszapfen befestigt werden kann. Von diesem kreisförmig ausgebildeten oder ovalen ersten Hauptelementbereich erstrecken sich strahlenförmig die mehreren zweiten Hauptelementbereiche nach außen.

Die mehreren plattenförmigen Füllelemente sind dazu ausgebildet, die Bereiche zwischen den mehreren zweiten Hauptelementbereichen, in Draufsicht betrachtet, vollständig auszufüllen, so dass ein im Wesentlichen rechteckiges Fahrzeugrahmenfronmodul gebildet wird. Die mehreren plattenförmigen Füllelemente umgeben somit den ersten Hauptelementbereich und füllen die Bereiche zwischen den mehreren zweiten Hauptelementbereichen vollständig aus.

Durch die sich bezüglich des Königszapfens strahlenförmig vom ersten Hauptelementbereich erstreckenden mehreren zweiten Hauptelementbereiche können die Abstützkräfte des sich auf einer zugfahrzeugseitigen Sattelkupplungsplatte über das plattenförmige Hauptelement abstützenden Sattelaufliegers optimal in das plattenförmige Hauptelement eingeleitet und strahlenförmig in die zweiten Hauptelementbereiche weitergeleitet werden. Dabei können die erwähnten Abstützkräfte des Sattelaufliegers auch in die mehreren plattenförmigen Füllelemente eingeleitet werden.

Die mehreren Füllelementen können ferner dazu ausgebildet sein, das Fahrzeugrahmenfrontmodul hinsichtlich Torsions- bzw. Verwindungskräfte, die beispielsweise bei Abbiegevorgängen des Zuggespanns auftreten können, zu versteifen und somit dem Fahrzeugrahmen eine insgesamt erforderliche Steifigkeit zu verleihen.

Bei einer bevorzugten Ausgestaltung des erfindungsgemäßen Fahrzeugrahmenfrontmoduls sind die plattenförmigen Füllelemente in die Bereiche zwischen die zweiten Hauptelementbereiche eingebracht und mit dem plattenförmigen Hauptelement derart verschweißt, dass zumindest ein Teil einer im Wesentlichen ebenen Ladefläche des Sattelaufliegers gebildet wird. Aufgrund der unterschiedlichen Stärken des plattenförmigen Hauptelements und der plattenförmigen Füllelemente bedeutet dies, dass sich an der Unterseite des Fahrzeugrahmenfrontmoduls mehrere Vertiefungen und an der Oberseite eine im Wesentlichen ebene Fläche ergeben.

Bei einer bevorzugten Ausgestaltung des erfindungsgemäßen Fahrzeugrahmenfrontmoduls bildet das plattenförmige Hauptelement zusammen mit den damit verschweißten mehreren plattenförmigen Füllelementen in Draufsicht ein im Wesentlichen rechteckiges Fahrzeugrahmenfrontmodul. Das erfindungsgemäße Fahrzeugrahmenfrontmodul kann mit einem Heckbereich des Fahrzeugrahmens des Sattelaufliegers verschweißt werden.

Bei einer weiteren bevorzugten Ausgestaltung des erfindungsgemäßen Fahrzeugrahmenfrontmoduls erstreckt sich zumindest ein zweiter Hauptelementbereich senkrecht zu einer Längsachse des Sattelaufliegers nach rechts und ein weiterer zweiter Hauptelementbereich senkrecht zur Längsachse des Sattelaufliegers nach links. Ferner kann sich in einer solchen bevorzugten Ausgestaltung ein weiterer zweiter Hauptelementbereich vom ersten Hauptelementbereich parallel zur Längsachse des Sattelaufliegers nach vorne erstrecken und ist somit vor dem Königszapfen angeordnet. Demzufolge bilden die soeben beschriebenen und bezüglich des Königszapfens strahlenförmig verlaufenden drei zweiten Hauptelementbereiche in Draufsicht eine T-Form. Alternativ oder zusätzlich kann sich jeweils ein weiterer zweiter Hauptelementbereich zwischen dem sich nach vorne und dem sich zur Seite erstreckenden zweiten Hauptelementbereich unter einem vorbestimmten Winkel zur Längsachse des Sattelaufliegers erstrecken. Beispielsweise bilden diese zweiten Hauptelementbereiche einen Winkel mit der Längsachse des Sattelaufliegers, der im Bereich von ungefähr 10° bis 90°, insbesondere 20° bis ungefähr 60° liegt und vorzugsweise ungefähr 35° beträgt. Diese beiden zweiten Hauptelementbereiche erstrecken sich bezüglich des Königszapfens vom ersten Hauptelementbereich jeweils strahlenförmig schräg nach vorne.

Die mehreren zweiten Hauptelementbereiche weisen in Draufsicht bevorzugt jeweils eine streifenartige Gestalt auf, d. h. dass in Draufsicht die Seitenkanten der zweiten Hauptelementbereiche jeweils parallel zueinander verlaufen und somit eine im Wesentlichen konstante Breite aufweisen. Beispielsweise liegt die Breite eines zweiten Hauptelementbereichs in einem Bereich zwischen ungefähr 5 % bis ungefähr 30%, insbesondere ungefähr 10% bis 20 % der Gesamtbreite des Fahrzeugrahmenfrontmoduls. Die Gesamtbreite des Fahrzeugrahmenfrontmoduls kann beispielsweise durch den Abstand der äußeren Kanten der sich senkrecht zur Längsachse des Sattelaufliegers nach links und rechts erstreckenden zweiten Hauptelementbereiche des plattenförmigen Hauptelements definiert werden.

In einer weiteren bevorzugten Ausgestaltung des erfindungsgemäßen Fahrzeugrahmenfrontmoduls weist das plattenförmige Hauptelement ferner zumindest einen dritten Hauptelementbereich auf, der sich im Wesentlichen parallel zur Längsachse des Sattelaufliegers vom ersten Hauptelementbereich aus von vorne nach hinten erstreckt. Der zumindest eine dritte Hauptelementbereich ist dazu ausgebildet, mit den Hauptlängsträgern des Fahrzeugrahmenheckbereichs des Fahrzeugrahmens des Sattelaufliegers verbunden, insbesondere verschweißt, zu werden. Vorzugsweise weist das plattenförmige Hauptelement zwei dritte Hauptelementbereiche auf, die sich vom ersten Hauptelementbereich beabstandet voneinander und parallel zur Längsachse des Sattelaufliegers von vorne nach hinten erstrecken. Bevorzugt sind die beiden dritten Hauptelementbereiche derart voneinander beabstandet, dass die Längsachsen der beiden dritten Hauptelementbereiche mit den Längsachsen der Hauptlängsträger in Draufsicht auf das Fahrzeugrahmenfrontmodul fluchtend verlaufen. Dementsprechend kann beispielsweise jeder dritte Hauptelementbereich mit einem zugeordneten Hauptlängsträger des Fahrzeugrahmenheckbereichs des Fahrzeugrahmens des Sattelaufliegers verschweißt werden.

Bei einer bevorzugten Ausgestaltung des erfindungsgemäßen Fahrzeugrahmenfrontmoduls sind weitere plattenförmige Füllelemente in die Bereiche zwischen den zweiten und dritten Hauptelementbereiche eingebracht und wiederum mit dem plattenförmigen Hauptelement verschweißt. Dabei ist es bevorzugt, dass die plattenförmigen Füllelemente, die in die Bereiche zwischen den zweiten und dritten Hauptelementbereichen eingebracht sind, in Draufsicht eine trapezförmige Gestalt aufweisen. Die trapezförmige Gestalt ist vorzugsweise derart ausgestaltet, dass das plattenförmige Füllelement in Draufsicht eine sich von vom nach hinten verlaufende verjüngende Form hat. Somit weist das erfindungsgemäße Fahrzeugrahmenfrontmodul im vorderen Bereich eine größere Breite als im hinteren Bereich auf.

Bei einer bevorzugten Ausgestaltung des erfindungsgemäßen Fahrzeugrahmenfrontmoduls bestehen das plattenförmige Hauptelement und die mehreren plattenförmigen Füllelemente aus Gusseisen, Stahlguss, Stahl oder hochfestem Stahl, beispielsweise aus S 355 JO, QSTE 690, S 355 MC, S 235, S 275 N, S 275 NL, S 355 N, S 355 NL, S 420 N, S 420 NL, S 460 N, S 460 NL.

Die zweite Stärke der mehreren plattenförmigen Füllelemente liegt im Bereich von ungefähr 10 % bis ungefähr 50%, insbesondere bis ungefähr 30 % der ersten Stärke des plattenförmigen Hauptelements. Beispielsweise liegt die erste Stärke im Bereich von ungefähr 20 mm bis ungefähr 45 mm und die zweite Stärke im Bereich von ungefähr 2 mm bis ungefähr 12 mm, insbesondere ungefähr 4 mm bis ungefähr 10 mm. Bei einer bevorzugten Ausgestaltung des erfindungsgemäßen Fahrzeugrahmenfrontmoduls beträgt die erste Stärke ungefähr 30 mm und die zweite Stärke ungefähr 6 mm. Die erste Stärke des plattenförmigen Hauptelements gibt die Sattelhalshöhe an. So kann ein erfindungsgemäßer Fahrzeugrahmen eines Sattelaufliegers, der ein Fahrzeugrahmenfrontmodul mit einem plattenförmigen Hauptelement mit einer ersten Stärke von 30 mm aufweist, als Sattelauflieger mit einem "30er Sattelhals" bezeichnet werden.

Bei einer bevorzugten Ausgestaltung des erfindungsgemäßen Fahrzeugrahmens weist das erfindungsgemäße Fahrzeugrahmenfrontmodul eine geringere Höhe als der Fahrzeugrahmenheckbereich des erfindungsgemäßen Fahrzeugrahmens auf. Bevorzugt weist der erfindungsgemäße Fahrzeugrahmen einen Übergangsbereich auf, der eine Verbindung zwischen dem Fahrzeugrahmenfrontmodul und dem Fahrzeugrahmenheckbereich herstellt und den Höhenunterschied zwischen dem Fahrzeugrahmenfrontmodul und dem Heckbereich ausgleichen kann.

Bei einer bevorzugten Ausgestaltung des erfindungsgemäßen Fahrzeugrahmens bildet das plattenförmige Hauptelement die Tragplatte für den Königszapfen und stützt sich bei einer Koppelung des erfindungsgemäßen Fahrzeugrahmens mit einem Zugfahrzeug auf der zugfahrzeugseitigen Sattelkupplungsplatte ab. Dabei können, wie bereits erwähnt, die Abstützkräfte des Fahrzeugrahmens in das erste und zweite Hauptelement eingeleitet werden.

Bei einer weiteren bevorzugten Ausgestaltung weist das erfindungsgemäße Fahrzeugrahmenfrontmodul seitlich angebrachte Seitenleistenelemente auf, die dazu ausgebildet sind, in vertikaler Richtung über das plattenförmige Hauptelement und die plattenförmigen Füllelemente nach oben vorzustehen. Die in vertikaler Richtung vorstehenden Seitenleistenelemente können als seitlicher Anschlag für das auf dem Fahrzeugrahmenfrontmodul transportierte Ladegut dienen.

Der erfindungsgemäße Fahrzeugrahmen ist bei einer bevorzugten Ausgestaltung dazu ausgebildet, als sogenannter Megatrailer verwendet zu werden. Megatrailer weisen, im Gegensatz zu Standard-Sattelaufliegern, eine lichte Ladehöhe von ca. 3 m auf. Folglich bieten Megatrailer ein maximales Ladevolumen, das insbesondere für den Transport im Automotivbereich und somit für die Kraftfahrzeughersteller von Interesse ist.

### Kurze Beschreibung der Zeichnungen

Weitere Merkmale und Aspekte dieser Offenbarung werden durch die folgende Beschreibung und die beiliegenden Zeichnungen offensichtlich in denen:
Fig. 1 eine perspektivische Ansicht eines erfindungsgemäßen Fahrzeugrahmens eines Sattelaufliegers von schräg oben zeigt,
Fig. 2 eine Unteransicht des in der Fig. 1 dargestellten Fahrzeugrahmens zeigt,
Fig. 3 eine Schnittansicht des beispielhaft offenbarten Fahrzeugrahmens entlang der Linie III - III der Fig. 2 zeigt,
Fig. 4 eine vergrößerte Ansicht des Bereichs IV der Fig. 3 zeigt, und
Fig. 5 eine Schnittansicht des beispielhaft offenbarten Fahrzeugrahmens entlang der Linie V - V der Fig. 3 zeigt.

### Ausführliche Beschreibung von Ausführungsbeispielen

In der Beschreibung dieser Erfindung beziehen sich Richtungsangaben auf einen Fahrzeuganhänger bei Vorwärtsfahrt. In seitlicher Richtung bedeutet somit diejenige Richtung, die entlang der Senkrechten zu einem Vorwärtsfahrtrichtungsvektor des Fahrzeuganhängers verläuft und der Links-Rechts-Richtung entspricht.

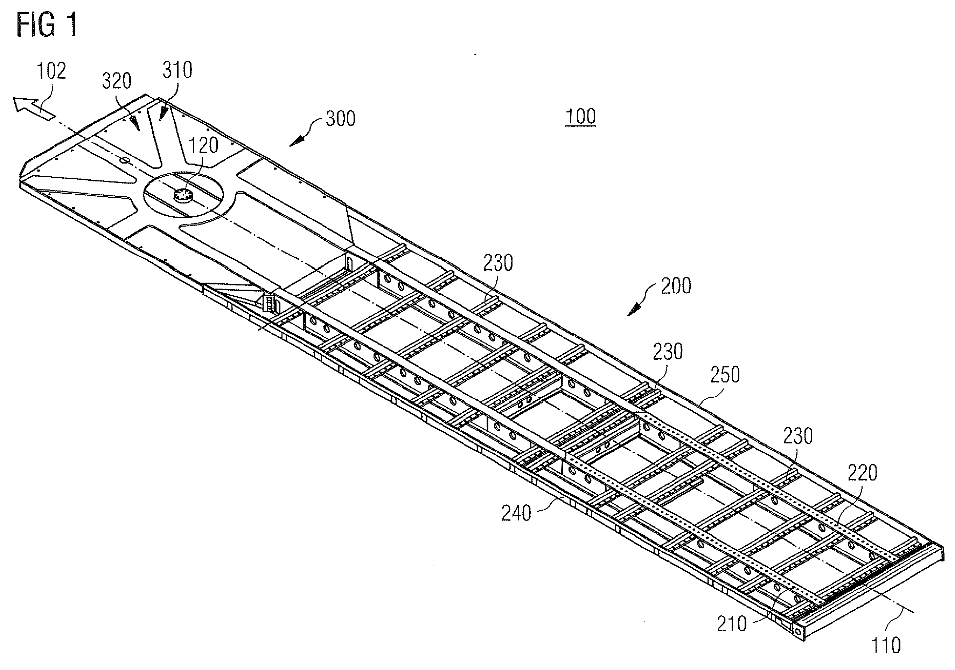

Eine beispielhafte Ausführungsform eines erfindungsgemäßen Fahrzeugrahmens 100 eines Sattelaufliegers, das einen Fahrzeugrahmenheckbereich 200 und ein erfindungsgemäßes Fahrzeugrahmenfrontmodul 300 aufweist, ist in den Fig. 1 bis 4 gezeigt. In den Fig. 1 bis 3 zeigt der Pfeil 102 die Vorwärtsfahrtrichtung des Fahrzeugrahmens 100 an.

Der in der Fig. 1 in perspektivischer Ansicht von schräg oben dargestellte Fahrzeugrahmen 100 weist das erfindungsgemäße Fahrzeugrahmenfrontmodul 300 auf, das mit dem Fahrzeugrahmenheckbereich 200 verbunden, insbesondere verschweißt, ist. Der Fahrzeugrahmenheckbereich 200 hat einen ersten Hauptlängsträger 210 und einen zweiten Hauptlängsträger 220, die sich beabstandet voneinander parallel zu einer Längsachse 110 des Fahrzeugrahmens 100 erstrecken.

Der erste Hauptlängsträger 210 und der zweite Hauptlängsträger 220 sind in dem gezeigten Beispiel als Doppel-T-Träger ausgebildet. In anderen Ausführungsformen können jedoch der erste und zweite Hauptlängsträger 210, 220 als T-Träger, I-Träger, U-Träger oder Hohlträger oder jede andere für Fahrzeugrahmen bekannte Trägerform gebildet sein.

Wie in der Fig. 1 gezeigt, weist der Fahrzeugrahmenheckbereich 200 mehrere Querträger 230 auf, die sich senkrecht zur Längsachse 110 erstrecken und jeweils mit dem ersten und zweiten Hauptlängsträger 210, 220 verbunden, insbesondere verschweißt, sind. Die mehreren Querträger 230 erstrecken sich zu beiden Seiten über den ersten und zweiten Hauptlängsträger 210, 220 hinaus und sind an ihren Enden jeweils mit einem ersten Seitenlängsträger 240 und einem zweiten Seitenlängsträger 250 verbunden, insbesondere verschweißt. Der erste und zweite Seitenlängsträger 240, 250 erstrecken sich jeweils parallel zur Längsachse 110 und weisen, wie in der Fig. 1 dargestellt, die Gestalt eines Hohlrahmens, Hohlprofils, L- oder U-Profils auf. In anderen Ausführungsformen können jedoch der erste und zweite Seitenlängsträger 240, 250 als Doppel-T-Träger, T-Träger, I-Träger oder jede andere bekannte Trägerformt aufweisen.

Der erste und zweite Seitenlängsträger 240, 250 begrenzen jeweils die Breite des gesamten Fahrzeugrahmenheckbereichs 200 und sind dazu ausgebildet, auf dem Fahrzeugrahmen 100 Aufbauten, wie beispielweise einen Container (in den Figuren nicht gezeigt), aber auch Rungen und Bordwände aufzunehmen. Außerdem können die ersten und zweiten Seitenlängsträger 240, 250 dazu ausgebildet, weitere Vorrichtungen, wie beispielsweise Planenverschlüsse, aufzuweisen. Es ist auch möglich, dass eines oder mehrere der Außenrahmenprofile 240, 250 eine obere Vertiefung aufweisen, innerhalb der Zurrösen integriert sein können.

Beispielsweise liegt die Breite des Fahrzeugrahmenheckbereichs 200 im Bereich von ungefähr 2400 mm bis ungefähr 3000 mm. Vorzugsweise beträgt die Breite des Fahrzeugrahmenheckbereichs 200 ungefähr 2550 mm.

Der Fahrzeugrahmenheckbereich 200 weist ferner mindestens eine Radachse (in den Zeichnungen nicht dargestellt) auf. Beispielsweise kann der erfindungsgemäße Fahrzeugrahmen 100, der als sogenannter Megatrailer verwendet werden kann, insgesamt drei Radachsen aufweisen.

Das Fahrzeugrahmenfrontmodul 300 hat eine im Wesentlichen plattenförmige Gestalt und weist, wie in der Fig. 1 gezeigt, ein plattenförmiges Hauptelement 310 auf, das dazu ausgebildet ist, einen Königszapfen 120 aufzunehmen. Das Fahrzeugrahmenfrontmodul 300 weist außerdem mehrere plattenförmige Füllelemente 320 auf, die mit dem plattenförmigen Hauptelement verbunden, insbesondere verschweißt sind.

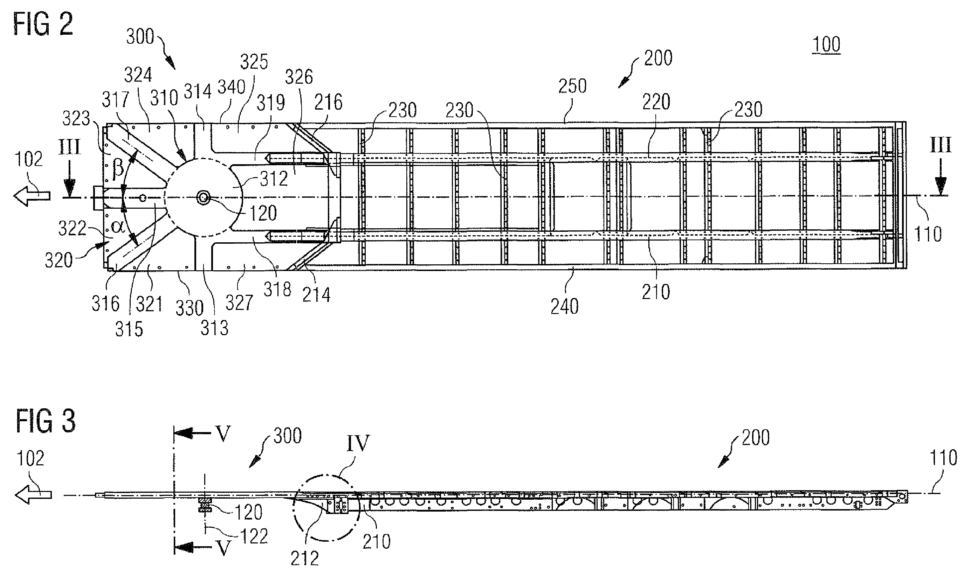

Die Fig. 2 zeigt eine Unteransicht des Fahrzeugrahmens 100 der Fig. 1. In der Fig. 2 ist zu erkennen, dass das plattenförmige Hauptelement 310 einen ersten Hauptelementbereich 312 und mehrere sich bezüglich des Königszapfens 120 strahlenförmig vom Hauptelementbereich 312 erstreckende zweite Hauptelementbereiche 313, 314, 315, 316 und 317 aufweist. In den Zeichnungen ist das plattenförmige Hauptelement 310 mit insgesamt fünf zweiten Hauptelementbereichen 313 - 317 gezeigt. In anderen Ausführungsformen kann das plattenförmige Hauptelement 310 weniger oder mehr als fünf zweite Hauptelementbereiche 313 - 317 aufweisen, die sich jeweils bezüglich des Königszapfens 120 strahlenförmig vom ersten Hauptelementbereich 312 erstrecken.

Der erste Hauptelementbereich 312 ist im Wesentlichen kreisförmig und konzentrisch um den Königszapfen 120 angeordnet. Insbesondere ist der Königszapfen 120 am plattenförmigen Hauptelement 310 im Bereich des ersten Hauptelementbereichs 312 angebracht.

Wie in der Fig. 2 gezeigt, erstreckt sich der zweite Hauptelementbereich 313, in Vorwärtsrichtung 102 betrachtet, senkrecht zur Längsachse 110 nach links und der zweite Hauptelementbereich 314 erstreckt sich, in Vorwärtsrichtung betrachtet, senkrecht zur Längsachse 110 nach rechts. Der zweite Hauptelementbereich 315 erstreckt sich bezüglich des Königszapfens 120 vom ersten Hauptelementbereich 312 nach vorne und verläuft parallel zur Längsachse 110. Der zweite Hauptelementbereich 316 erstreckt sich unter einem Winkel α zur Längsachse 110, in Vorwärtsrichtung betrachtet, schräg nach links vorne und der zweite Hauptbereich 317 erstreckt sich unter einem Winkel β zur Längsachse 110, in Vorwärtsrichtung 102 betrachtet, schräg nach rechts vorne.

In der Fig. 2 ist außerdem gezeigt, dass das plattenförmige Hauptelement 310 mehrere dritte Hauptelementbereiche 318 und 319 aufweist, die sich entgegen der Vorwärtsrichtung 102 vom ersten Hauptelementbereich 312 parallel zur Längsachse 110 von vorne nach hinten erstrecken. In einer anderen Ausführungsform weist das plattenförmige Hauptelement 110 mehr oder weniger als zwei dritte Hauptelementbereiche 318, 319 auf.

Der dritte Hauptelementbereich 318 erstreckt sich beabstandet vom dritten Hauptelement 319 und ist mit dem ersten Hauptlängsträger 210 verschweißt. Der dritte Hauptelementbereich 319 ist mit dem zweiten Hauptlängsträger 220 verschweißt. Vorzugsweise ist der Abstand der dritten Hauptelementbereiche 318, 319 voneinander gleich dem Abstand des ersten Hauptlängsträgers 210 vom zweiten Hauptlängsträger 220.

Die Fig. 2 zeigt, dass sich die fünf zweiten Hauptelementbereiche 313 - 317, die jeweils streifenförmig ausgebildet sind, bezüglich des Königszapfens 120 jeweils strahlenförmig vom ersten Hauptelementbereich 312 nach außen erstrecken. Die streifenförmigen zweiten Hauptelementbereiche 313 - 317 haben jeweils Längsachsen, die sich in einem gemeinsamen Punkt schneiden, der sich mittig im ersten Hauptelementbereich 312 befindet. In der in der Fig. 2 gezeigten Ausgestaltung liegt dieser Schnittpunkt der Längsachsen, in Draufsicht betrachtet, auf der Längsachse 110 und knapp vor einer vertikalen Achse 122 (siehe Fig. 3) des Königszapfens 120. Demzufolge haben die mehreren zweiten Hauptelementbereiche 313 - 317 bezüglich des Schnittpunkts einen radialen Verlauf.

Die streifenförmigen zweiten Hauptelementbereiche 316 und 317 sind an ihren Enden derart geformt, dass diese die vorderen Eckbereiche des im Wesentlichen rechteckigen Fahrzeugrahmenfrontmoduls 300 bilden.

In einer beispielhaften Ausgestaltung dieses Fahrzeugrahmenfrontmoduls ist das vordere Ende des streifenförmigen zweiten Hauptelementbereichs 315 an beiden Seiten abgeschnitten. Jedoch besteht zwischen dem streifenförmigen zweiten Hauptelementbereich 315 und den Füllelementen 322 und 323 kein "Freiraum", d. h. keine Öffnung. Die beiden "Schrägen" am vorderen Ende (315) dienen der Kabelführung.

Die Breiten der streifenförmigen zweiten Hauptelementbereiche 313 - 317 liegen in einem Bereich von ungefähr 5 % bis ungefähr 30 % der Gesamtbreite des Fahrzeugrahmenfrontmoduls. Beispielsweise liegen die Breiten der streifenförmigen zweiten Hauptelementbereiche 313 - 317 im Bereich von ungefähr 100 mm bis 700 mm, insbesondere im Bereich von 200 mm bis ungefähr 300 mm. Die Gesamtbreite des Fahrzeugrahmenfrontmoduls 300 liegt im Bereich von ungefähr 2350 mm bis 3000 mm, insbesondere 2550 mm bis ungefähr 2650 mm.

Das erfindungsgemäße Fahrzeugrahmenfrontmodul 300 weist ferner mehrere plattenförmigen Füllelemente 320 auf, die jeweils zwischen den zweiten Hauptelementbereichen 313 - 317 und den dritten Hauptelementbereichen 318, 319 eingebracht und mit dem plattenförmigen Hauptelement 310 verschweißt sind.

Wie in der Fig. 2 dargestellt, füllen die plattenförmigen Füllelemente 321 - 327 in Draufsicht die Bereiche zwischen den zweiten Hauptelementbereichen 313 - 317 und den dritten Hauptelementbereichen 318, 319 vollständig aus und verleihen dem Fahrzeugrahmenfrontmodul 300 somit die im Wesentlichen rechteckige Gestalt.

Das Füllelement 321 ist zwischen den zweiten Hauptelementbereichen 313 und 316 eingebracht und mit dem plattenförmigen Hauptelement 310 verschweißt. Das Füllelement 322 ist zwischen den zweiten Hauptelementbereichen 315 und 316 eingebracht und mit dem plattenförmigen Hauptelement 310 verschweißt. Das Füllelement 323 ist zwischen den zweiten Hauptelementbereichen 315 und 317 eingebracht und mit dem plattenförmigen Hauptelement 310 verschweißt. Das Füllelement 324 ist zwischen den zweiten Hauptelementbereichen 314 und 317 eingebracht und mit dem plattenförmigen Hauptelement 310 verschweißt.

Ferner ist das Füllelement 325 zwischen dem zweiten Hauptelementbereich 314 und dem dritten Hauptelementbereich 319 eingebracht und mit dem plattenförmigen Hauptelement 310 verschweißt und das Füllelement 327 ist zwischen dem zweiten Hauptelementbereich 313 und dem dritten Hauptelementbereich 318 eingebracht und mit dem plattenförmigen Hauptelement 310 verschweißt. Außerdem ist das Füllelement 326 zwischen den dritten Hauptelementbereichen 318 und 319 eingebracht und mit dem plattenförmigen Hauptelement 310 verschweißt.

In der Fig. 2 ist ersichtlich, dass die plattenförmigen Füllelemente 325 und 327 eine trapezförmige Gestalt aufweisen, bei der sich die in Vorwärtsrichtung betrachtet hintere Kante jeweils schräg in Richtung der Längsachse 110 nach innen verläuft. Diese beiden plattenförmigen Füllelemente 325 und 327 verleihen dem Fahrzeugrahmenfrontmodul 300 in Draufsicht eine sich nach hinten verjüngende Form.

In der Fig. 2 ist ferner gezeigt, dass der Fahrzeugrahmen 100 ein erstes Stützelement 214 und ein zweites Stützelement 216 aufweist, die jeweils die Verbindung zwischen dem Fahrzeugrahmenheckbereich 200 und dem Fahrzeugrahmenfronmodul 300 verstärken. Das erste bzw. zweite Stützelement 214, 216 ist, wie in der Fig. 2 dargestellt, mit den jeweiligen schräg verlaufenden Kanten der Füllelemente 325, 327 verbunden.

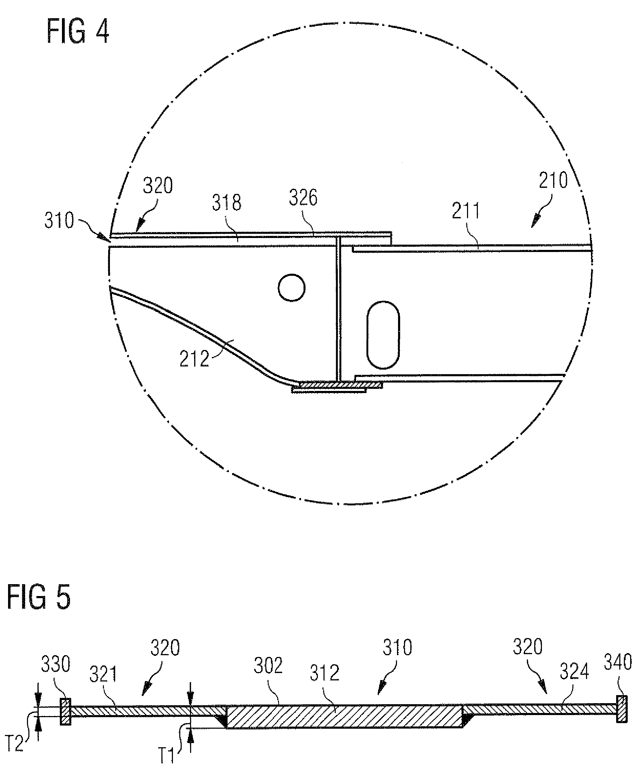

Das Fahrzeugrahmenfrontmodul 300 weist außerdem ein erstes Seitenleistenelement 330 und eine zweites Seitenleistenelement 340 auf, die sich parallel zur Längsachse 100 erstrecken und seitlich am Fahrzeugrahmenfrontmodul 300 angebracht sind. Die Seitenleistenelemente 330, 340 werden unter Verweis auf die Fig. 5 detaillierter dargestellt.

Unter Bezugnahme auf die Fig. 3 ist eine Schnittansicht des Fahrzeugrahmens 100 entlang der Linie III - III der Fig. 2 gezeigt. In der Fig. 3 ist dargestellt, dass sich der Königszapfen 120 entlang einer vertikalen Achse 122 vom Fahrzeugrahmenfrontmodul 300 nach unten erstreckt.

In der Fig. 3 ist ferner zu erkennen, dass der vordere Bereich des Fahrzeugrahmenheckbereichs eine sich in vertikaler Richtung verjüngende Form aufweist. Beispielsweise weisen der erste und der zweite Hauptlängsträger 210, 220 jeweils ein Abschlusselement 212 auf (in der Schnittansicht der Fig. 3 ist nur eins davon gezeigt), das eine Verbindung zwischen dem Fahrzeugrahmenheckbereich 200 und dem Fahrzeugrahmenfrontmodul 300 herstellt. Insbesondere ist das Abschlusselement 212 dazu ausgebildet, den Höhenunterschied zwischen dem aus den Hauptlängsträgern 210, 220, den Querträgern 230 und den Seitenlängsträgern 240, 250 gebildeten Fahrzeugrahmenheckbereich 200 und dem plattenförmigen Fahrzeugrahmenfrontmodul 300 auszugleichen. Vorzugsweise ist das plattenförmige Fahrzeugrahmenfrontmodul 300 auf die Obergurte der Hauptlängsträger 210, 220 aufgesetzt und mit diesen verschweißt. Das Abschlusselement 212 ist in einer beispielhaften Ausgestaltung viermal vorhanden, wovon sich jeweils zwei in unterschiedlichen Winkeln zu einer Außenseite hin erstrecken.

Die Fig. 4 zeigt eine vergrößerte Ansicht des Bereichs IV der Fig. 3. In der Fig. 4 ist zu erkennen, dass das plattenförmige Hauptelement 310 des Fahrzeugrahmenfronmoduls 300 auf den Obergurt 211 des ersten Hauptlängsträgers 210 aufgesetzt und mit diesem verbunden, insbesondere verschweißt, ist. Das Abschlusselement 212 kann als Doppel-T-Trägerelement, T-Trägerelement, I-Trägerelement, Vollelement, Hohlträgerelement oder jede andere bekannte Trägerform ausgebildet sein. Wie in der Fig. 4 dargestellt, verjüngt sich das Abschlusselement 212 von hinten nach vorne.

Die Fig. 5 zeigt eine Schnittansicht durch das Fahrzeugrahmenfrontmodul 300 entlang der Linie V - V der Fig. 3. Der Schnitt verläuft dabei vor dem Königszapfen 120 durch den ersten Hauptelementbereich 312 (siehe gepunktete Linie in der Fig. 2).

Aus der Fig. 5 ist ersichtlich, dass das plattenförmige Hauptelement 310 eine erste Stärke T1 und die plattenförmigen Füllelemente 320 jeweils eine zweite Stärke T2 aufweisen, die kleiner als die erste Stärke T1 ist. In anderen Ausführungsformen können die plattenförmige Füllelemente 321 - 327 unterschiedliche zweite Stärken T2 aufweisen, die jedoch jeweils kleiner als die erste Stärke T1 sind. Die Stärke T1 liegt beispielsweise im Bereich zwischen ungefähr 20 mm und 45 mm und beträgt vorzugsweise ungefähr 30 mm. Die zweite(n) Stärke(n) T2 liegen beispielsweise im Bereich zwischen ungefähr 2 mm bis 20 mm, insbesondere 4 mm bis ungefähr 12 mm, vorzugsweise im Bereich zwischen ungefähr 6 mm und ungefähr 8 mm.

Die plattenförmigen Füllelemente 320 sind bevorzugt mit dem plattenförmigen Hauptelement 310 derart verschweißt, dass eine im Wesentlichen ebene Oberfläche 302 gebildet wird, die z .B. als Ladefläche des Sattelaufliegers dienen kann.

In der Fig. 5 ist außerdem dargestellt, dass das Fahrzeugrahmenfrontmodul 300 ein erstes Seitenleistenelement 330 und ein zweites Seitenleistenelement 340 aufweist, die sich parallel zur Längsachse 110 erstrecken. Das erste und zweite Seitenleistenelement 330, 340 weisen jeweils einen rechteckigen Querschnitt auf. In anderen Ausführungsformen können jedoch das erste und zweite Seitenleistenelement 330, 340 jede andere geeignete Querschnittsform aufweisen.

Das erste und zweite Seitenleistenelement 330, 340 sind derart seitlich am Fahrzeugrahmenfrontmodul 300 vorgesehen, dass die Oberkanten der Seitenleistenelemente 330, 340 oberhalb der ebenen Oberfläche 302 liegen. Somit können die beiden Seitenleistenelemente 330, 340 einen Anschlag für das auf der ebenen Oberfläche 302 transportierte Ladegut bilden. Die Höhe der ersten und zweiten Seitenleistenelemente 330, 340 kann jeweils im Bereich zwischen ungefähr 35 mm bis 90 mm, insbesondere 50 mm und ungefähr 90 mm liegen und beträgt vorzugsweise ungefähr 70 mm. Bevorzugt beträgt der über die ebene Oberfläche 302 vorstehende Bereich der ersten und zweiten Seitenleistenelemente 330, 340 ungefähr 30 mm, der zugleich als seitlicher Anschlag für Transportgut dienen kann.

Abschließen ist noch anzumerken, dass die Ausgestaltung des Fahrzeugrahmenfrontmoduls es auch ermöglicht, dass die Steifigkeit des Fahrzeugrahmenfrontmoduls an die Steifigkeit des restlichen Fahrzeugrahmens angepasst werden kann. So kann vermieden werden, dass das Fahrzeugrahmenfrontmodul gegenüber dem restlichen Fahrzeugrahmen zu steif ausgebildet ist. Wenn dies der Fall wäre, könnte in diesem Fall die Bruchgefahr am Übergang der beiden Elemente erhöht sein.

Obwohl die bevorzugten Ausführungsformen dieser Erfindung hierin beschrieben worden sind, können Verbesserungen und Modifikationen hierin eingearbeitet sein, ohne vom Schutzbereich der folgenden Ansprüche abzuweichen.

## Patentansprüche

1. Fahrzeugrahmenfrontmodul (300) eines Fahrzeugrahmens (100) eines Sattelaufliegers, mit:
- einem plattenförmigen Hauptelement (310) mit einer ersten Stärke (T1), wobei das plattenförmige Hauptelement (310) einen ersten Hauptelementbereich (312), der dazu ausgebildet ist, einen Königszapfen (120) aufzunehmen, und mehrere zweite Hauptelementbereiche (313, 314, 315, 316, 317) aufweist, die dazu ausgebildet sind, sich bezüglich des Königszapfens (120) strahlenförmig vom ersten Hauptelementbereich (312) zu erstrecken, und
- mehreren plattenförmigen Füllelementen (320) mit einer zweiten Stärke (T2), die kleiner als die erste Stärke (T1) ist, wobei die mehreren plattenförmigen Füllelemente (320) in die Bereiche zwischen den mehreren zweiten Hauptelementbereichen (313, 314, 315, 316, 317) eingebracht und mit dem plattenförmigen Hauptelement (310) verschweißt sind.

2. Fahrzeugrahmenfrontmodul (300) nach Anspruch 1, wobei das plattenförmige Hauptelement (310) mit den mehreren plattenförmigen Füllelementen (320) derart verschweißt ist, dass zumindest ein Teil einer im Wesentlichen ebenen Ladefläche des Sattelaufliegers gebildet wird.

3. Fahrzeugrahmenfronmodul (300) nach einem der vorhergehenden Ansprüche, wobei
das plattenförmige Hauptelement (310) ferner zumindest einen dritten Hauptelementbereich (318, 319) aufweist, der sich vom ersten Hauptelementbereich (312) im Wesentlichen parallel zu einer Längsachse (110) des Fahrzeugrahmens (100) des Sattelaufliegers von vorne nach hinten erstreckt, und
die mehreren plattenförmigen Füllelemente (320) ferner in die Bereiche zwischen den mehreren zweiten Hauptelementbreichen (313, 314, 315, 316, 317) und/oder dritten Hauptelementbereichen (318, 319) eingebracht sind.

4. Fahrzeugrahmenfrontmodul (300) nach Anspruch 3, wobei das plattenförmige Hauptelement (310) zwei dritte Hauptelementbereiche (318, 319) aufweist, die sich unter einem vorbestimmten Abstand voneinander vom ersten Hauptelementbereich (312) im Wesentlichen parallel zur Längsachse (110) des Fahrzeugrahmens (100) des Sattelaufliegers von vorne nach hinten erstrecken.

5. Fahrzeugrahmenfrontmodul (300) nach Anspruch 4, wobei die zumindest zwei dritten Hauptelementbereiche (318, 319) dazu ausgebildet sind, mit einem jeweiligen Hauptlängsträger (210, 220) des Fahrzeugrahmens (100) des Sattelaufliegers verschweißt zu werden.

6. Fahrzeugrahmenfrontmodul (300) nach Anspruch 5, wobei die zumindest zwei dritten Hauptelementbereiche (318, 319) dazu ausgebildet sind, mit dem jeweiligen Hauptlängsträger (210, 220) des Fahrzeugrahmens (100) des Sattelaufliegers fluchtend angeordnet ist.

7. Fahrzeugrahmenfrontmodul (300) nach einem der Ansprüche 3 bis 6 wobei die mehreren plattenförmigen Füllelemente (320), die in die Bereiche zwischen den mehreren zweiten Hauptelementbereichen (313, 314, 315, 316, 317) und/oder dritten Hauptelementbereichen (318, 319) eingebracht sind, derart geformt sind, dass das Fahrzeugrahmenfrontmodul (300) in einem hinteren Bereich eine geringere Breite aufweist als in einem vorderen Bereich.

8. Fahrzeugrahmenfrontmodul (300) nach einem der vorhergehenden Ansprüche, wobei das Verhältnis von der ersten Stärke (T1) zur zweiten Stärke (T2) im Bereich von ungefähr 2 bis ungefähr 10, bevorzugt im Bereich von ungefähr 3 bis ungefähr 7, insbesondere bei ungefähr 5 liegt.

9. Fahrzeugrahmenfrontmodul (300) nach Anspruch 8, wobei die erste Stärke (T1) ungefähr 20 mm bis ungefähr 40 mm, insbesondere ungefähr 30 mm, beträgt und die zweite Stärke (T2) ungefähr 2 mm bis 20 mm, insbesondere 4 mm bis ungefähr 8 mm, insbesondere ungefähr 6 mm, beträgt.

10. Fahrzeugrahmenfrontmodul (300) nach einem der vorhergehenden Ansprüche, wobei die mehreren zweiten Hauptelementbereiche (313, 314, 315, 316, 317) jeweils im Wesentlichen streifenförmig ausgebildet sind.

11. Fahrzeugrahmenfrontmodul (300) nach einem der vorhergehenden Ansprüche, wobei der erste Hauptelementbereich (312) eine im Wesentlichen kreisförmige Gestalt hat und dazu ausgebildet ist, den Königszapfen (120) aufzunehmen.

12. Fahrzeugrahmenfronmodul (300) nach einem der vorhergehenden Ansprüche ferner mit:
einem ersten Seitenleistenelement (330), das parallel zur Längsachse (110) des Fahrzeugrahmens (100) verläuft und seitlich am plattenförmigen Hauptelement (310) und/oder zumindest einem der mehreren plattenförmigen Füllelemente (320) angebracht ist, und/oder
einem zweiten Seitenleistenelement (340), das parallel zur Längsachse (110) des Fahrzeugrahmens (100) verläuft und gegenüber dem ersten Seitenleistenelement (330) seitlich am plattenförmigen Hauptelement (310) und/oder zumindest einem der mehreren plattenförmigen Füllelemente (320) angebracht ist.

13. Fahrzeugrahmenfrontmodul (300) nach Anspruch 12, wobei das erste Seitenleistenelement (330) und/oder das zweite Seitenleistenelement (340) derart seitlich am plattenförmigen Hauptelement (310) und/oder zumindest einem der mehreren plattenförmigen Füllelemente (320) angebracht ist, dass das erste Seitenleistenelement (340) und/oder zweite Seitenleistenelement (340) in vertikaler Richtung über das plattenförmige Hauptelement (310) nach oben vorsteht, und dazu ausgebildet ist, einen seitlichen Anschlag für Ladegut bereitzustellen.

14. Fahrzeugrahmen (100) eines Sattelaufliegers, mit:
- einem Fahrzeugrahmenheckbereich (200) mit einem ersten Hauptlängsträger (210) und einem vom ersten Hauptlängsträger (210) beabstandet angeordneten zweiten Hauptlängsträger (220), und
- einem Fahrzeugrahmenfrontmodul (300) nach einem der vorhergehenden Ansprüche, wobei das plattenförmige Hauptelement (310) mit dem ersten und zweiten Hauptlängsträger (210, 220) verschweißt ist.

15. Fahrzeugrahmen (100) nach Anspruch 14, wobei eine Höhe der ersten und zweiten Hauptlängsträger (210, 220) in einem vorderen Bereich geringer ist als eine Höhe der Hauptlängsträger (210, 220) in einem hinteren Bereich.

## Claims

1. A vehicle frame front module (300) of a vehicle frame (100) of a semitrailer, comprising:
- a plate-shaped main element (310) with a first thickness (T1), wherein the plate-shaped main element (310) includes a first main element portion (312) configured to receive a kingpin (120) and a plurality of second main element portions (313, 314, 315, 316, 317) configured to radially extend from the first main element portion (312) with respect to the kingpin (120), and
- a plurality of plate-shaped filling elements (320) with a second thickness (T2) smaller than the first thickness (T1), wherein the plurality of plate-shaped filling elements (320) are integrated into the portions between the plurality of second main element portions (313, 314, 315, 316, 317), and welded to the plate-shaped main element (310).

2. The vehicle frame front module (300) according to claim 1, wherein the plate-shaped main element (310) is welded to the plurality of plate-shaped filling elements (320) such that at least a part of a substantially flat loading area of the semitrailer is formed.

3. The vehicle frame front module (300) according to any one of the preceding claims, wherein
the plate-shaped main element (310) further includes at least one third main element portion (318, 319) extending from the first main element portion (312) substantially parallel to a longitudinal axis (110) of the vehicle frame (100) of the semitrailer from front to rear, and
the plurality of plate-shaped filling elements (320) is further integrated into the portions between the plurality of second main element portions (313, 314, 315, 316, 317) and/or the third main element portions (318, 319).

4. The vehicle frame front module (300) according to claim 3, wherein the plate-shaped main element (310) includes two third main element portions (318, 319) extending in a predetermined distance to one another from the first main element portion (312) substantially parallel to the longitudinal axis (110) of the vehicle frame (100) of the semitrailer from front to rear.

5. The vehicle frame front module (300) according to claim 4, wherein the at least two third main element portions (318, 319) are configured to be welded to a corresponding main longitudinal beam (210, 220) of the vehicle frame (100) of the semitrailer.

6. The vehicle frame front module (300) according to claim 5, wherein the at least two third main element portions (318, 319) are configured to be aligned with the corresponding main longitudinal beam (210, 220) of the vehicle frame (100) of the semitrailer.

7. The vehicle frame front module (300) according to any one of claims 3 to 6, wherein the plurality of plate-shaped filling elements (320) integrated into the portions between the plurality of second main element portions (313, 314, 315, 316, 317) and/or third main element portions (318, 319) are formed such that the vehicle frame front module (300) includes a smaller width in a rear portion than in a front portion.

8. The vehicle frame front module (300) according to any one of the preceding claims, wherein the ratio of the first thickness (T1) to the second thickness (T2) is in the range from about 2 to about 10, preferably in the range from about 3 to about 7, particularly about 5.

9. The vehicle frame front module (300) according to claim 8, wherein the first thickness (T1) is about 20 mm to about 40 mm, particularly about 30 mm, and the second thickness (T2) is about 2 mm to 20 mm, particularly 4 mm to about 8 mm, particularly about 6 mm.

10. The vehicle frame front module (300) according to any one of the preceding claims, wherein the plurality of second main element portions (313, 314, 315, 316, 317) is in each case configured substantially strip-shaped.

11. The vehicle frame front module (300) according to any one of the preceding claims, wherein the first main element portion (312) includes a substantially circular shape, and is configured to receive the kingpin (120).

12. The vehicle frame front module (300) according to any one of the preceding claims, further comprising:
a first sidebar element (330) extending parallel to the longitudinal axis (110) of the vehicle frame (100) and being laterally attached at the plate-shaped main element (310) and/or at least one of the plurality of plate-shaped filling elements (320), and/or
a second sidebar element (340) extending parallel to the longitudinal axis (110) of the vehicle frame (100) and being laterally attached at the plate-shaped main element (310) and/or at least one of the plurality of plate-shaped filling elements (320) opposite to the first sidebar element (330).

13. The vehicle frame front module (300) of claim 12, wherein the first sidebar element (330) and/or the second sidebar element (340) are laterally attached at the plate-shaped main element (310) and/or at least one of the plurality of plate-shaped filling elements (320) such that the first sidebar element (340) and/or the second sidebar element (340) extends above the plate-shaped main element (310) in a vertical direction, and is configured to provide a side limit stop for a load.

14. A vehicle frame (100) of a semitrailer, comprising:
- a vehicle frame rear portion (200) including a first main longitudinal beam (210) and a second main longitudinal beam (220) arranged spaced apart from the first main longitudinal beam (210), and
- a vehicle frame front portion (300) according to any one of the preceding claims, wherein the plate-shaped main element (310) is welded to the first and second main longitudinal beams (210, 220).

15. The vehicle frame (100) according to claim 14, wherein a height of the first and second main longitudinal beams (210, 220) is smaller in a front portion than a height of the main longitudinal beams (210, 220) in a rear portion.

## Revendications

1. Module frontal de châssis de véhicule (300) d'un châssis de véhicule (100) d'une semi-remorque avec :
- un élément principal (310) en forme de plaque avec une première épaisseur (T1), l'élément principal (310) en forme de plaque présentant une première zone d'élément principal (312) qui est réalisée afin de recevoir un pivot maître (120), et plusieurs secondes zones d'élément principal (313, 314, 315, 316, 317) qui sont réalisées afin de s'étendre par rapport au pivot maître (120) en forme de rayon depuis la première zone d'élément principal (312) et
- plusieurs éléments de remplissage en forme de plaque (320) avec une seconde épaisseur (T2) qui est inférieure à la première épaisseur (T1), les plusieurs éléments de remplissage en forme de plaque (320) étant introduits dans les zones entre les plusieurs secondes zones d'élément principal (313, 1314, 315, 316, 317) et étant soudés à l'élément principal en forme de plaque (310).

2. Module frontal de châssis de véhicule (300) selon la revendication 1, l'élément principal (310) en forme de plaque étant soudé aux plusieurs éléments de remplissage en forme de plaque (320) de telle manière qu'au moins une partie d'une surface de charge sensiblement plane de la semi-remorque soit formée.

3. Module frontal de châssis de véhicule (300) selon l'une quelconque des revendications précédentes,
l'élément principal en forme de plaque (310) présentant de plus au moins une troisième zone d'élément principal (318, 319) qui s'étend de la première zone d'élément principal (312) sensiblement parallèlement à un axe longitudinal (110) du cadre de véhicule (100) de la semi-remorque de l'avant vers l'arrière et
les plusieurs éléments de remplissage en forme de plaque (320) étant de plus introduits dans les zones entre les plusieurs deuxièmes zones d'élément principal (313, 314, 315, 316, 317) et/ou troisièmes zones d'élément principal (318, 319).

4. Module frontal de châssis de véhicule (300) selon la revendication 3, l'élément principal en forme de plaque (310) présentant deux troisièmes zones d'élément principal (318, 319) qui s'étendent sous une distance prédéterminée l'une de l'autre par rapport à la première zone d'élément principal (312) sensiblement parallèlement à l'axe longitudinal (110) du châssis de véhicule (100) de la semi-remorque de l'avant vers l'arrière.

5. Module frontal de châssis de véhicule (300) selon la revendication 4, les au moins deux troisièmes zones d'élément principal (318, 319) étant réalisées afin d'être soudées avec un longeron principal respectif (210, 220) du châssis de véhicule (100) de la semi-remorque.

6. Module frontal de châssis de véhicule (300) selon la revendication 5, les au moins deux troisièmes zones d'élément principal (318, 319) étant réalisées afin d'être agencées en alignement avec le longeron principal respectif (210, 220) du châssis de véhicule (100) de la semi-remorque.

7. Module frontal de châssis de véhicule (300) selon l'une quelconque des revendications 3 à 6, les plusieurs éléments de remplissage en forme de plaque (320) qui sont introduits dans les zones entre les plusieurs secondes zones d'élément principal (313, 314, 315, 316, 317) et/ou troisièmes zones d'éléments principal (318, 319), étant formés de telle manière que le module frontal de châssis de véhicule (300) présente dans une zone arrière une largeur plus faible que dans une zone avant.

8. Module frontal de châssis de véhicule (300) selon l'une quelconque des revendications précédentes, le rapport entre la première épaisseur (T1) et la seconde épaisseur (T2) étant dans la plage d'environ 2 à environ 10, de préférence dans la plage d'environ 3 à environ 7, en particulier près d'environ 5.

9. Module frontal de châssis de véhicule (300) selon la revendication 8, la première épaisseur (T1) s'élevant à environ 20 mm à environ 40 mm, en particulier à environ 30 mm et la seconde épaisseur (T2) s'élevant à environ 2 mm à 20 mm, en particulier à 4 mm à environ 8 mm, en particulier à environ 6 mm.

10. Module frontal de châssis de véhicule (300) selon l'une quelconque des revendications précédentes, les plusieurs secondes zones d'élément principal (313, 314, 315, 316, 317) étant réalisées respectivement sensiblement en forme de bande.

11. Module frontal de châssis de véhicule (300) selon l'une quelconque des revendications précédentes, la première zone d'élément principal (312) ayant une forme sensiblement cylindrique et étant réalisée afin de recevoir le pivot maître (120).

12. Module frontal de châssis de véhicule (300) selon l'une quelconque des revendications précédentes, de plus avec :
un premier élément de barre latérale (330) qui s'étend parallèlement à l'axe longitudinal (110) du châssis de véhicule (100) et est monté latéralement sur l'élément principal (310) en forme de plaque et/ou au moins l'un des plusieurs éléments de remplissage en forme de plaque (320) et/ou
un second élément de barre latérale (340) qui s'étend parallèlement à l'axe longitudinal (110) du châssis de véhicule (100) et est monté par rapport au premier élément de barre latérale (330) latéralement sur l'élément principal (310) en forme de plaque et/ou au moins l'un des plusieurs éléments de remplissage en forme de plaque (320).

13. Module frontal de châssis de véhicule (300) selon la revendication 12, le premier élément de barre latérale (330) et/ou le second élément de barre latérale (340) étant monté latéralement sur l'élément principal (310) en forme de plaque et/ou au moins l'un des plusieurs éléments de remplissage en forme de plaque (320) de telle manière que le premier élément de barre latérale (340) et/ou second élément de barre latérale (340) dépasse vers le haut dans la direction verticale de l'élément principal en forme de plaque (310) et soit réalisé afin de mettre à disposition une butée latérale pour un produit de chargement.

14. Châssis de véhicule (100) d'une semi-remorque avec :
- une zone arrière de châssis de véhicule (200) avec un premier longeron principal (210) et un second longeron principal (220) agencé à distance du premier longeron principal (210) et
- un module frontal de châssis de véhicule (300) selon l'une quelconque des revendications précédentes, l'élément principal en forme de plaque (310) étant soudé au premier et second longerons principaux (210,220).

15. Châssis de véhicule (100) selon la revendication 14, une hauteur des premier et second longerons principaux (210, 220) étant plus faible dans une zone avant qu'une hauteur des longerons principaux (210, 220) dans une zone arrière.
